# EUROPEAN PATENT SPECIFICATION

(11) **EP 2 593 703 B1**
(45) Date of publication and mention of the grant of the patent: **02.11.2016**
(21) Application number: 10854803.3
(22) Date of filing: 15.07.2010
(51) Int. Cl.: F16L 21/06, F16L 21/08, F16B 7/22, A47F 5/06, F16B 7/14, F16L 37/18

(54) **A CLAMP FOR A PIPE ASSEMBLY, AN ENGAGEMENT DEVICE FOR THE CLAMP, AND A PIPE ASSEMBLY HAVING THE CLAMP**
SCHELLE FÜR EINE ROHRANORDNUNG, EINRASTVORRICHTUNG FÜR DIE SCHELLE UND ROHRANORDNUNG MIT DER SCHELLE
ATTACHE DESTINÉE À UN ENSEMBLE TUYAU, DISPOSITIF DE MISE EN PRISE DESTINÉ À L'ATTACHE ET ENSEMBLE TUYAU DOTÉ DE L'ATTACHE

(43) Date of publication of application: 22.05.2013
(73) Proprietor: Opium Co Pte Ltd, Singapore 049834 (SG)
(72) Inventor: LEE, James, Singapore 049834 (SG)
(74) Representative: Talbot-Ponsonby, Daniel Frederick
(86) International application number: PCT/SG2010/000268
(87) International publication number: WO 2012/008918

(56) References cited:
- EP-A1- 0 449 194
- EP-A1- 0 972 491
- EP-A1- 1 217 224
- EP-A1- 2 169 241
- WO-A1-95/20107
- WO-A1-2007/125166
- DE-A1- 3 225 913
- DE-B- 1 087 818
- GB-A- 2 366 592
- US-A- 3 315 819
- US-A- 5 295 717
- US-A1- 2002 076 266

## Description

### Field of this invention

This invention relates to a clamp for a pipe assembly having an adjustable effective length and used, particularly but not exclusively, as a support structure for supporting or holding an object for display or use. This invention also relates to an engagement device for the clamp, and a pipe assembly having an adjustable effective length and including the clamp.

### Background of the invention

A support structure for supporting or holding an object for display or use sometimes takes the form of a pipe assembly, which comprises an inner pipe slidably movable within an outer pipe. A user may install the pipe assembly by resting the outer pipe on a floor while sliding the inner pipe towards a ceiling. After the pipe assembly has been properly positioned between the floor and the ceiling, the user locks the pipes to prevent them from moving. This is achieved by operating a handle of the pipe assembly, so that it cooperates with other mechanical parts of the pipe assembly to lock the pipes. Accordingly the pipe assembly can be secured in place between the floor and the ceiling. However, such a pipe assembly may be cumbersome to operate.

EP2169241 discloses to a regulating device for gymnastic machines. The regulating device comprising at least a lever for manual selective lock and release, associated with a first member, at least a toothed rod, associated to a second member slidable relative to the first member and a pawl mechanically interlocked to the lever and selectively engageable in one of the teeth of the toothed rod. Such a regulating device is not suitable for a pipe assembly nor does it enable adjustment of the pipe assembly's effective length.

EP0972491 discloses a clamping device for interconnecting two elongate elements, such as a retractor to a retractor support structure. The clamping device comprises a shaft and a first clamping member mounted on the shaft for clamping to a first elongate element. The clamping device further comprises a second clamping member mounted on the shaft and the second clamping member is displaceable along the shaft for clamping a second elongate member between the first clamping member and the second clamping member. A cam locking mechanism is operably connected to the shaft for selectively moving the clamping device between clamping and non-clamping conditions. Again, such a clamping device is not suitable for a pipe assembly nor does it enable adjustment of the pipe assembly's effective length.

GB2366592 discloses a clamp for an elongate member, such as a clamp for locking adjustable telescopic legs of a tripod stand for a camera. Similarly, DE10 87 818 discloses a clamp for tripod legs, especially for heavy photographic and cinematographic tripods. However, in either document, it is not possible to maintain the clamp positively in a position relative to the telescopic legs while allowing adjustment of the length of the telescopic legs.

EP1217224 discloses a clamping device for two telescopic tubes. The clamping device comprises a longitudinally split ring and defining a longitudinal gap located in a plane intersecting the longitudinal ring. However, it is not possible to maintain the clamping device positively in a position relative to the two telescopic tubes while allowing adjustment of the length of the telescopic tubes.

It is therefore an object of this invention to propose to the general public an improved pipe assembly that at least ameliorates the problem described above.

### Summary of the invention

A first aspect of this invention relates to a clamp for a pipe assembly having an adjustable effective length. The clamp comprises: a clamp body configured to be clamped to the pipe assembly and includes an engagement device separable from the clamp body, the engagement device having a channel; and a handle pivotably connected to the clamp body and includes an engagement member. The handle is pivotably connected to the clamp body and includes an engagement member, wherein the handle is pivotable between a first position in which the engagement member engages with the channel of the engagement device to maintain the position of the handle relative to the clamp body whilst allowing free adjustment of the effective length of the pipe assembly, and a second position in which the engagement member is disengaged from the channel to tighten the clamp body, characterized in that the channel extends radially from a common pivoting axis of the clamp body and the handle.

Since the engagement member is configured to engage with the channel of the engagement device when the handle is at the first position, the position of the handle may be easily maintained relative to the clamp body. Moreover it may be easier to pivot the handle from the first position - which allows free adjustment of the effective length of the pipe assembly - to the second position in which the clamp body is tightened.

The engagement device may be replaceable. This allows the user to replace just the engagement device instead of the entire clamp due to wear, thereby reducing maintenance costs of the clamp.

The channel may be arranged from a line of symmetry on a major surface of the engagement device at an angle of between 28 and 33 degrees about the common pivoting axis of the clamp body and the handle.

The engagement device may include a tapered section for guiding the engagement member out of the channel to tighten the clamp body gradually.

The tapered section may be arranged adjacent to the radial channel at an angle of between 15 and 20 degrees about the common pivoting axis of the clamp body and the handle. Advantageously the tapered section may prevent the handle from pivoting back as it pivots towards the end of the downward range of motion, and may further hold the pipe assembly may be securely held in place.

A wall of the clamp body may comprise a plurality of planar surfaces for providing a grip to the pipe assembly.

The handle may comprise a pivotal connection for connecting to the clamp body; and a lever operable by a user to tighten or loosen the clamp body. Specifically the lever may be removably attached to the pivotal connection. The handle may also comprise a socket for securing an item for display or use. Specifically the socket may be removably attached to the pivotal connection in place of the lever.

The handle may comprise a locking mechanism for preventing pivotal movement of the handle about the clamp body. The handle may further comprise a lock-release member configured to cooperate with the locking mechanism to resume the pivotal movement of the handle about the clamp body. The lock-release member may be removable.

By removing the lock-release member and/or the lever from the pipe assembly, any tampering of the pipe assembly by an unauthorised user - such as to unlock the handle from the clamp - may be avoided.

Also disclosed herein is an engagement device for a clamp. The clamp has a clamp body and a handle pivotably connected to the clamp body and arranged to tighten the clamp body. The engagement device has a channel and is configured to cooperate with an engagement member of the handle to pivot the handle between a first position in which the engagement member engages with the channel of the engagement device to maintain the position of the handle relative to the clamp body whilst allowing a pipe to be freely insertable through the clamp body, and a second position in which the engagement member is disengaged from the channel to tighten the clamp body

A second aspect of the invention relates to a pipe assembly having an adjustable effective length and comprising the clamp as described.

The pipe assembly may further comprise a lock having a catch for locking the handle to prevent pivotal movement of the handle about the clamp body.

The lock may have a cone-shaped structure so that an internal radial gap at one end of the lock is comparable to a corresponding internal radial gap at the opposite end of the lock. This may reduce the radial gap between the lock and an inner pipe, which may reduce chances of injuries to the user's palm when he operates the pipe assembly.

The pipe assembly may also comprise a further clamp having an anti-slip ring member with a wall crevice to provide a grip force for securing the further clamp to one of the first and second pipes.

The pipe assembly may further comprise a support surface engagement member having a coupling member for coupling to an end of the pipe assembly and configured to enable relative rotation of the pipe assembly about a longitudinal axis of the pipe assembly. Advantageously this allows adjustment of the handle position even when the pipe assembly is held between a ceiling and a floor.

Some other optional features of the pipe assembly are defined in the dependent claims,

Also disclosed herein is a handle for a clamp. The handle comprises: a pivotal connection; and a lever pivotable by a user about the pivotal connection to tighten or loosen the clamp. Specifically the lever is removable from the pivotal connection.

Also disclosed herein is a lock for a pipe assembly having a clamp, which includes a clamp body and a handle pivotably connected to the clamp body. The lock is arranged to cooperate with a locking mechanism of the handle to prevent pivotal movement about the clamp body. Specifically the lock has a cone-shaped structure.

Also disclosed herein is a clamp for a pipe assembly. The clamp comprises: a main clamp body configured to be clamped along the pipe assembly; a handle operable to move the main clamp body between an unclamped position which allows slidable movement of the main clamp body and a clamped position which prevents the slidable movement of the main body; and an anti-slip ring member in relation to the main clamp body and the handle. Specifically a wall of the anti-slip ring member has a crevice to provide a grip for maintaining the main clamp body in the clamped position.

Also disclosed herein is a clamp for a pipe assembly having a lock. The clamp comprises: a clamp body configured to be clamped to the pipe assembly; and a handle having locking mechanism and a lock-release member, the handle being pivotably connected to the clamp body. The locking mechanism is arranged to cooperate with the lock to prevent pivotal movement of the handle about the clamp body and the lock-release member is arranged to cooperate with both the locking mechanism and the lock to resume the pivotal movement of the handle about the clamp body. Specifically the lock-release member is removable from the handle.

Also disclosed herein is a support surface engagement member for a pipe assembly having a longitudinal axis. Specifically the support surface engagement member comprises a coupling member for coupling to an end of the pipe assembly and configured to enable relative rotation of the pipe assembly about the longitudinal axis.

### Brief description of the drawings

Embodiments of this invention will be described, by way of example only, with reference to the drawings of which:
Figure 1 shows a pipe assembly for use as a support structure to display signage in a public area, in which the pipe assembly has at least a clamp having a clamp body and a handle, a lock, a top tensioned mechanism, and a bottom fixed mechanism;
Figure 2 shows an exploded view of the clamp body, the handle, and the lock of the pipe assembly of Figure 1;
Figures 3a and 3b show a disc for fitting to the clamp body of Figure 2;
Figure 3c shows an end view of the disc from the direction B-B' in Figure 3a;
Figures 4a to 4e show the handle of Figure 2 for connecting to various devices;
Figure 5a to 5e shows various lever configurations of the handle of Figure 2;
Figures 6a to 6d show various configurations of the lock of Figure 2;
Figures 7a and 7b show the arrangement of the pipe assembly of Figure 1 when assembling;
Figure 8a to 8c shows different views of the top tensioned mechanism of the pipe assembly of Figure 1;
Figures 9a to 9c show different configurations of the bottom fixed mechanism of the pipe assembly of Figure 1;
Figure 10 shows various cross-sectional views of the pipe assembly of Figure 1;
Figures 11 a to 11 c show different views of the pipe assembly of Figure 1 during use;
Figure 12 shows different views of a 4-ways clamp for use in the pipe assembly of Figure 1;
Figure 13 shows an exploded view of the 4-ways clamp of Figure 12;
Figures 14a and 14b show different views of two 1-way clamps for use in the pipe assembly of Figure 1;
Figures 15a and 15b show different views of two 2-way clamps for use in the pipe assembly of Figure 1;
Figure 16 shows an alternative use of the pipe assembly of Figure 1 for storing a golf bag;
Figure 17 shows a further alternative use of the pipe assembly of Figure 1 for office use.

### Detailed description of the embodiments

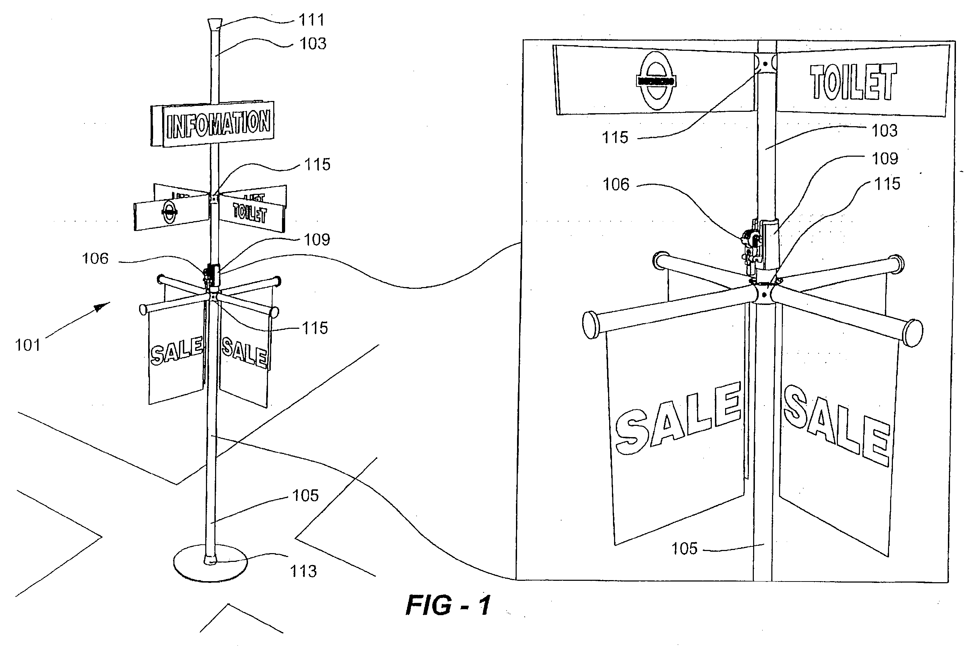

Figure 1 shows a pipe assembly 101 being used as a support structure in a public area to display signage. The pipe assembly 101 comprises: an upper pipe 103 and an lower pipe 105, the upper pipe 103 being slidably movable within the lower pipe 105; a clamp 106 arranged on the upper pipe 103; a handle 108 arranged relative to the clamp 106; a lock 109 for locking the handle 108; support surface engagement members (shown as a top tensioned mechanism 111 and a bottom fixed mechanism 113); and two 4-way clamps 115 for displaying the signage.

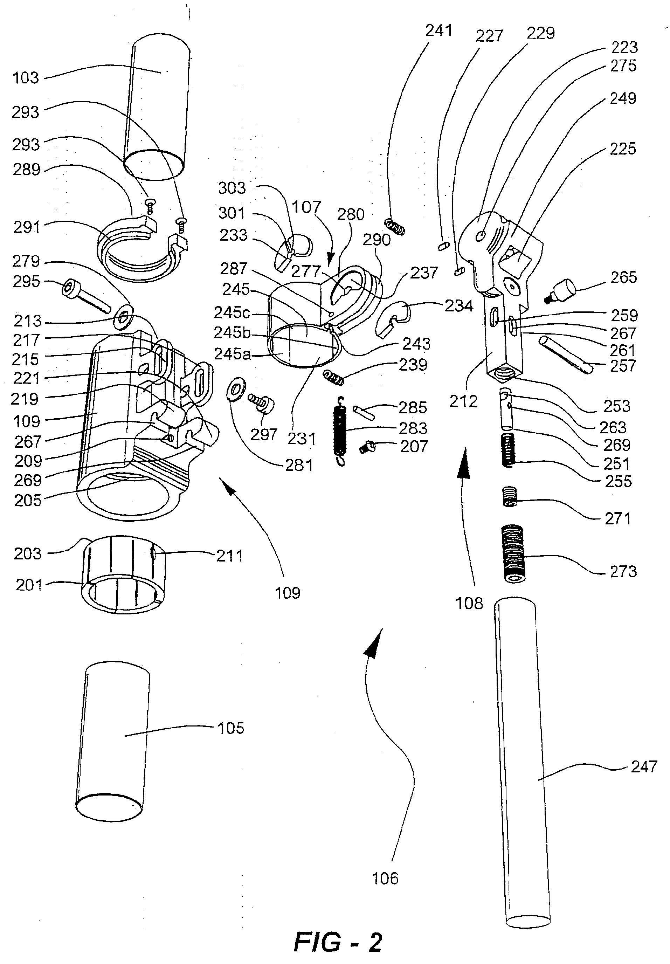

Figure 2 shows an exploded view of the pipe assembly 101. The lock 109 has a smooth outer surface casing, which conceals part of the moving parts of the pipe assembly 101. The lock 109 also has a slot 213, two sliding guides 215, 217, and two supporting ledges 219, 221. Specifically the lock 109 has a cone-shape structure, in which one end of an opening is larger than an opening at the opposite end. Accordingly, when the pipe assembly 101 is assembled, an internal radial gap at one end of the lock 109 in relation to the upper pipe 103 is comparable to a corresponding internal radial at the opposite end in relation to the lower pipe 105. Since the outer surface casing is angled it may provide a better grip by a user. Moreover since the lock 109 conceals at least part of the moving parts of the pipe assembly 101 it may avoid any injuries to the user during use.

A self-tightening rim 201, which firmly grips an end of the lower pipe 105 via friction, is arranged at one end of the lower pipe 105. The lock 109 is then fitted through the self-tightening rim 201 until an end 203 of the self-tightening rim 201 contacts internal threads 205 of the lock 109 to prevent further movement of the self-tightening rim 201 through the lock 109. Specifically inner wall dimensions of the lock 109 are configured to secure the self-tightening rim 201 in place. Preferably the self-tightening rim 201 is fabricated using steel or titanium.

A screw 207 is fitted through a tapped hole 209 of the lock 109 until it reaches the rim recess 211. In particular the screw 207 acts as a safety feature to ensure that the lower pipe 105 and the lock 109 are securely held in place. For them to be separated, the screw 207 has to be loosened from the rim recess 211 using impacting means (e.g. a mallard) to release the self-tightening rim 201.

The clamp 106 comprises a clamp body 107 and a handle 108. The clamp body 107 has a clamp opening 231 through which the upper pipe 103 is received and collars 280,290 which are coupled to the handle 108. Each of the collars 280, 290 includes a fan-shaped cavity on its outer surface for receiving an engagement device, shown in Figure 2 as fan-shaped discs 233, 234. Tension springs 239, 241 are placed into orifices (one of which is labelled as '243' in Figure 2) between the collars 280, 290 to create biasing forces to thereby increase the size of these orifices in the absence of any counteracting forces and thus the gap between the collars 280, 290. Accordingly the size of the clamp opening 231 is increased so that that the upper pipe 103 can be fitted through. When the collars 280, 290 are caused to move towards each other (as will be explained later), the orifices 243 becomes smaller which tightens the clamp body against the upper pipe 103.

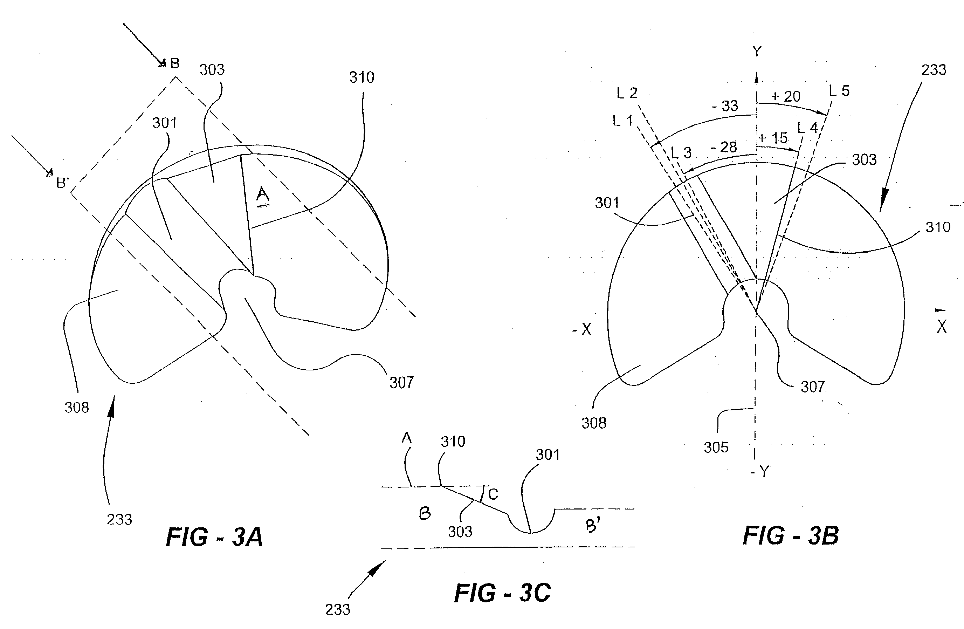

Figures 3a and 3b show magnified views of the fan-shaped disc 233 which has a generally fan-shaped body having a semi-circular channel 301 which extends radially from a pivoting axis 307 of the disc 233. The fan-shaped body also has a tapered section 303 which slopes upwards from the channel 301 towards a central Y-longitudinal axis 305 - corresponding to a line of symmetry on a major surface of the disc 233, and finally ends at a line 310. The channel 301 includes a longitudinal axis L2 which forms an angle of 30° with the central Y-longitudinal axis 305. However, the channel 301 may be arranged at an angle of between 28 and 33 degrees from the Y-longitudinal axis L2 - as shown by longitudinal axes L3 and L1 respectively. Accordingly it should be appreciated that the thickness of the tapered section 303 increases uniformly from the channel 301 to the line 310.

Figure 3b also shows the line 310 of the tapered section 303 being arranged on the fan-shaped body from the channel 301 at an angle of 15 and 20 degrees from the Y-longitudinal axis 305 relative to the pivoting point 307 of the fan-shaped disc 233. Accordingly the tapered section 303 may extend at a range of angle of between 43 degrees (i.e. 28+15) and 53 degrees (i.e. 33+20) about the pivoting axis 307 from the channel 301. Preferably the discs 233, 234 are fabricated using steel or titanium.

Figure 3c shows an end view of the disc 233 from the direction B-B' in Figure 3a. Specifically Figure 3c shows a surface A and the tapered section 303 tapering from the surface A and ends at the channel 301. A tapering angle C of the tapered section 303 relative to the surface A (imaginary horizontal line D-D extending from the surface A) may range between 20 degrees and 45 degrees. Preferably, the tapering angle C may range between 21 degrees and 44 degrees. More preferably, the tapering angle C may range between 22 degrees and 43 degrees. Even more preferably, the tapering angle C may range between 23 degrees and 42 degrees.

Further an inner wall of the clamp body 107 includes three planar surfaces 245a, 245b, and 245c, which provide a reasonable grip when the upper pipe 103 is introduced into the clamp opening 231. This is advantageous because due to mass production, such dimensions as outer diameters of pipes may be slightly inconsistent. By having these planar surfaces 245a, 245b, 245c at the inner wall 245 of the clamp body 107 to provide a reasonable grip of the Upper pipe 103, a larger tolerance of the pipe dimensions may be allowed.

Opposite sides 223, 225 of the handle 108 are configured for engaging the clamp body 107. In particular these opposite sides 223, 225 include an engagement mechanism (shown as thrusting rods 227, 229 in Figure 2), which are placed into respective slots (not shown) in the handle 108. The thrusting rods 227, 229 are configured to engage with the channels 301 of the discs 233, 234 of the clamp body 107 to maintain the position of the handle 108 relative to the clamp body 107. These thrusting rods 227, 229 are preferably fabricated using high-resistant material such as steel or titanium.

Moreover the handle 108 comprises a pivotal connection 212 and a lever 247 which the user can pivot to tighten or loosen the clamp body 107. The handle 108 is also provided with a finger guard 249 to protect the user against moving parts during use.

Furthermore a rod 251 - biased by a spring 255 - is inserted into an opening 253 of the handle 108. A locking rod 257 is connected diagonally through slot openings 259, 261, 263 of the handle 108. A lock-release member (shown as a knob 265 in Figure 2) is fitted though a sliding gap 267 to connect with the rod 251 via a screw opening 269. Accordingly the knob 265 can be removed from the handle 108 to be kept in a safe place. Since the user is required to push the knob 265 downward to release the locking rod 257 (and thereby the handle 108) from a locked position in grooves 267, 269 of the lock 109, tampering of the pipe assembly 101 by an unauthorised user may be avoided by removing the knob 265 from the handle 108.

A set screw 271 and a larger set screw 273 are screwed into the opening 253. As the spring 255 is blocked by a set screw 271, which is in turn blocked by the larger set screw 273, the rod 251 will be biased towards the opposite end of the opening 253. The larger set screw 273 is used to attach the lever 247 to the handle 108. Accordingly the lever 247 can be removed to reveal part of the larger set screw 273. Alternatively different types of suitable connectors may be attached to the larger set screw 273 to provide different configurations of the support structure.

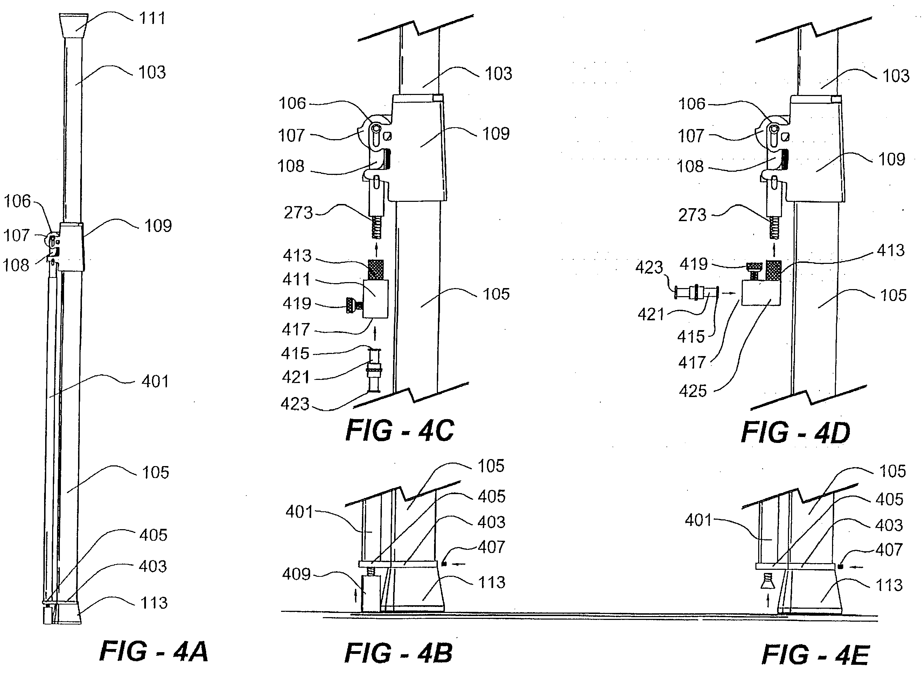

Figure 4a shows an end of an attachment rod 401 screwed to the set screw 273 after the lever 247 has been removed. The opposite end of the attachment rod 401 meets a controlling ring 403 at an opening 405, as shown in Figure 4e. The controlling ring 403 is able to move along the lower pipe 105 to facilitate different lengths of the attachment rod 401. The position of the controlling ring 403 can be secured by a set screw 407. A light-duty attachment clamp may be fixed onto the attachment rod 401 as a media to display product or as graphics to communicate. The attachment clamp can be in any size, any shape or any form as long as it can be securely attached onto the attachment rod 401. If, however, there is a need for the attachment rod 401 to rest on the floor for greater stability/strength, an adjustable castor 409 can be attached to the attachment rod 401, as shown in Figure 4b.

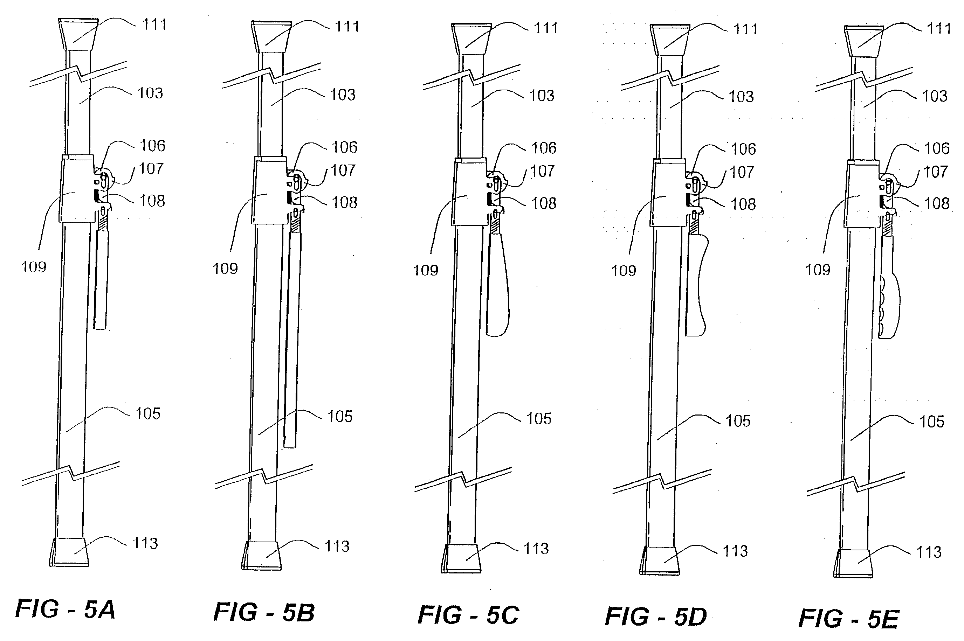

Figure 5, comprising Figures 5a to 5e, shows various configurations of the lever 247 for connecting to the set screw 273. Alternatively a straight female socket 411 can be attached to the set screw 273, as shown in Figure 4c. The straight female socket 411 comprises a rotatable attachment head 413, which can be turned clockwise to tighten and anti-clockwise to loosen.

Figure 4c also shows a male connector 415 being attached to the straight female socket 411 via an opening 417. By turning a knob 419 in a clockwise direction, the male connector 415 is locked inside the straight female socket 411 at a step gap 421. A universal connector end 423 located at the distal end of the male connector 415 can be used for attaching items such as lighting devices, signage, clips, graphics, media, and so forth. The dimensions of the straight female socket 411 may also be round, square, and/or triangular. An angled female socket 425 may instead be used in place of the straight female socket 411, as shown in Figure 4d.

Returning to Figure 2 it is seen that a looped spring 283 is connected between the clamp body 107 and the lock 109. One end of the looped spring 283 is positioned between the collars 280, 290 and secured onto a rod 285 arranged through a hole 287. The opposite end of the loop spring 283 is attached to the lock 109 via the screw 207 connected to the tapped hole 209.

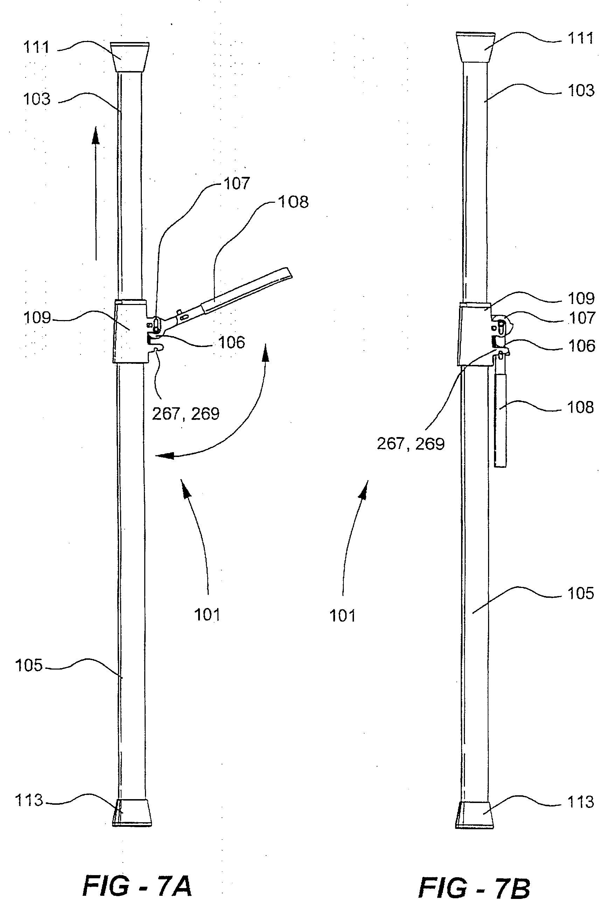

Thus the force exerted by the looped spring 283 pulls the clamp body 107 downwards, thereby causing the opposite end of the handle 108 to point in an upward direction as shown in Figure 7a.

In addition an upper ring 289 slides through the top of upper pipe 103 until a ring step 291 of the upper ring 289 rests on the opening of the lock 109. Two pieces of screws 293 fit through openings on the upper ring 289 to connect with corresponding screw openings on the lock 109. The upper ring 289 is easily replaceable and is also adaptable for use as a marketing tool for displaying customised logos or colours in accordance with user needs. Moreover the user could make use of the screw openings on the lock 109 to connect various items such as light duty signage, lighting purposes, or different sub-support structures.

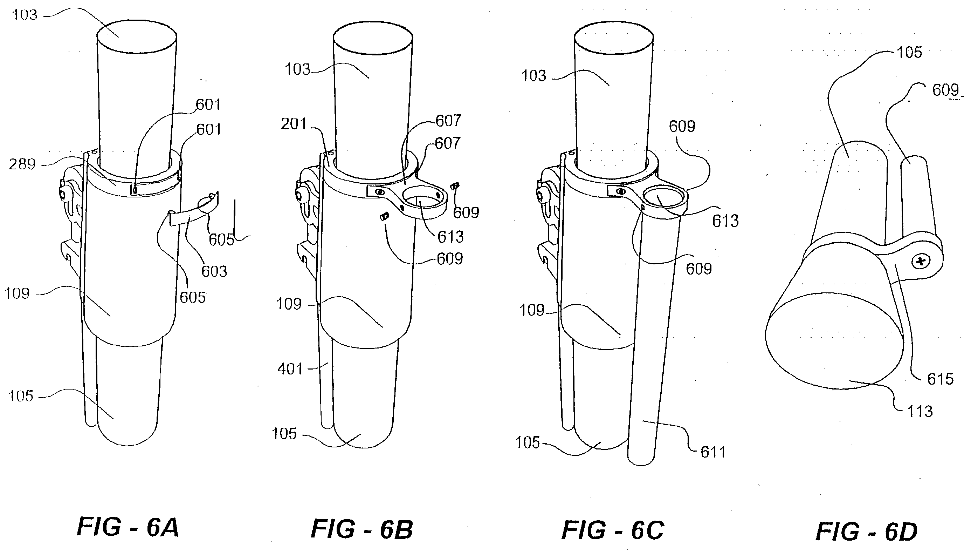

Figures 6a to 6c illustrate openings 601 at a side of the upper ring 289. Figure 6a shows a branding ring 603 for displaying any logo, shape and design according to user requirements. Such display may be textual, or include any font types or colour choice. Specifically the inner concave side of the branding ring 603 has knobs 605 which fit into the openings 601.

Alternatively a top guide 607 can be fitted to the upper ring 289, as shown in Figure 6b. The top guide 607 has holes 613 through which set screws 609 can fit.

Figure 6c shows one end of an attachment rod 611 being secured at an opening 613 of the top guide 607 via set screws 609. It should be appreciated that a diameter of the attachment rod 611 is small enough to fit through the opening 613, and that the length of the attachment rod 611 may be longer than the height of the upper ring 289. The other end of the attachment rod 611 can be connected to a controlling ring 615, as shown in Figure 6d. Alternatively, an adjustable castor may be used instead of the controlling ring 615.

Figures 7a and 7b explain the operation of the pipe assembly 101.

Figure 7a shows the arrangement of the handle 108 when the upper and lower pipes 103, 105 are not tensioned between the ceiling and floor. At this position the thrusting rods 227, 229 engage with the channels 301 of the fan-shaped discs 233, 234, to maintain the position of the handle 108 relative to the clamp body 107 whilst allowing free adjustment of the effective length of the pipe assembly 101 by sliding the upper and lower pipes 103, 105 relative to each other. The upper pipe 103 is also slidably movable through the clamp opening 231.

Connecting means - shown in Figure 2 as a socket 295 and a screw 297 - are fitted through the sliding guides 215, 217 of the lock 109, a pivoting axis 275 of the handle 108, and a pivoting axis 277 of the clamp body 107. Thus, when assembled, a pivoting axis common to both the handle 108 and the clamp body 107 is formed. Additionally washers 279, 281 are placed between the connecting means and the sliding guides 215, 217 of the lock 109 to reduce any frictional effect caused by the pivotal motion of the handle 108.

As the user pivots the handle 108 downwards through its range of motion, the thrusting rods 227, 229 disengage from the respective channels 301 of the discs 233, 234 and slide across the respective tapered sections 303 of the discs 233, 234. Since the thickness of the tapered sections 303 increases uniformly from channels 301 to the line 310, the thrusting rods 227, 229 causes the collars 280, 290 to move towards each other as they slide across the tapered sections 303 of the discs 233, 234. Accordingly the sizes of the orifices 243 and the clamp opening 231 are gradually reduced.

As the handle 108 is pivoted half-way through its downward range of motion, an intermediate position is reached whereby the thrusting rods 227, 229 reach a position on the tapered section 303 of the discs 233, 234 that tightens the clamp body 107. Specifically the handle 108 is pivoted from an unclamped position which allows free adjustment of an effective length of the pipe assembly 101 to the intermediate position which tightens the clamp body 107. The position of the upper pipe 103 is maintained in relation to the lower pipe 105 at this intermediate position. However, the user is still able to adjust the alignment and position of the pipe assembly 101 due to a biasing resilience means (e.g. a spring) of the top tensioned mechanism 111. The top tensioned mechanism 111 will be described later. As the position of the handle 108 is also maintained relative to the clamp body 107 at this intermediate position, the user can release the hand that he has been using to operate the handle 108, to do any necessary adjustment of the pipe assembly 101 using a water level if needed.

As the handle 108 continues to pivot from the intermediate position through its downward range of motion, the thrusting rods 227, 229 continue to cooperate with the tapered section 303 to further compress the spring of the top tensioned mechanism until the thrusting rods 227, 229 reach a tensioned position at the end of the tapered section 303 at the line 310. Specifically this is achieved because the tightened clamp body 107 grips the upper pipe 103 and the moment generated by a user force exerted on the handle 108 overcomes the biasing force of the loop spring 283 to push the upper pipe 103 away from the lower pipe 105 and towards the ceiling. Accordingly the tensioned position ensures that the pipe assembly 101 is securely held between the ceiling and the floor.

When the handle 108 is arranged at the tensioned position the second rod 257 fits snugly into the grooves 267, 269 of the lock 109 as shown in Figure 7b, which locks the handle 108 to prevent any further pivotal motion. To release the locking rod 257 - and thereby unlock the handle 108 - the user has to push the safety knob 265 downwards to move the locking rod 257 out of the grooves 267, 269 so that the lever 247 can again be pivoted about its pivoting axis as shown in Figure 7a.

As the upper and lower pipes 103, 105 are tensioned against a ceiling and a floor, the top tensioned mechanism 111 is required to absorb some length of the upper pipe 103 but still to hold the entire structure firmly.

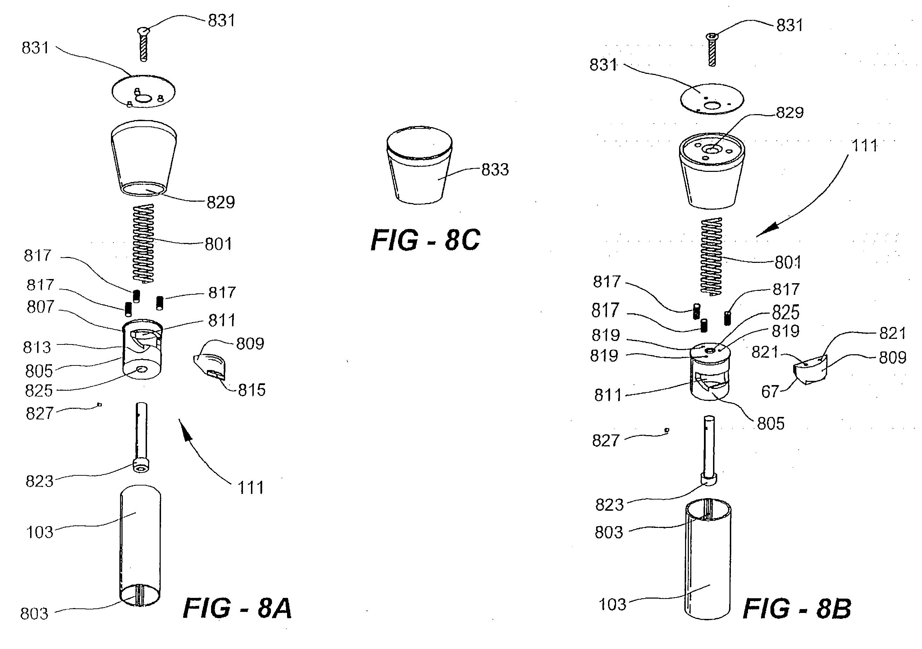

Figure 8 shows the top tensioned mechanism 111 arranged at an end of the upper pipe 103. In particular the top tensioned mechanism 111 houses a stainless steel spring 801, a tension base body 805 having a coupling member (shown as a flange or an end step 807) that radially protrudes from the tension base body 805. The end step 807 thus engages with one end of the upper pipe 103 to prevent the tension base body 805 from falling through to the opposite end. Furthermore the engagement between the end step 807 and the one end of the upper pipe 103 allows the user to rotate the pipe assembly 101 even when it is held in place between the ceiling and floor. Advantageously this allows the user to re-adjust the position of the handle 108 to enhance the ease of usage, for example when pipe assembly 101 is placed at the corner of a room or where access is limited by walls.

A moving grip portion 809 is cut out from the tension base body 805 to form a cavity 811. The moving grip portion 809 is slid into the tension base body 805 in a circumferential direction. Once the moving grip portion 809 fits inside the cavity 811, a ledge 813 of the tension based body 805 contacts a corresponding edge 815 of the moving grip portion 809 to prevent the latter from falling out of the tension base body 805.

The top tensioned mechanism 111 further includes screws 817 which fit through openings 819 to connect with screw openings 821 of the moving grip portion 809. A rod 823 fits through the tension base body 805 via openings 825. A suitable connector (shown as a screw 827 in Figure 8a) is then connected to the rod 823 to prevent it from falling through the openings 825. Alternatively a pin may be used instead of the screw 827.

The rod 823 then passes through the spring 801 and a top tension casing hole 829 to connect with a screw 831. When the generated tension forces are larger than the biasing forces of the stainless steel spring 801, the spring 801 is compressed and accordingly, the tension base body 805 is pushed downwards along the rod 823.

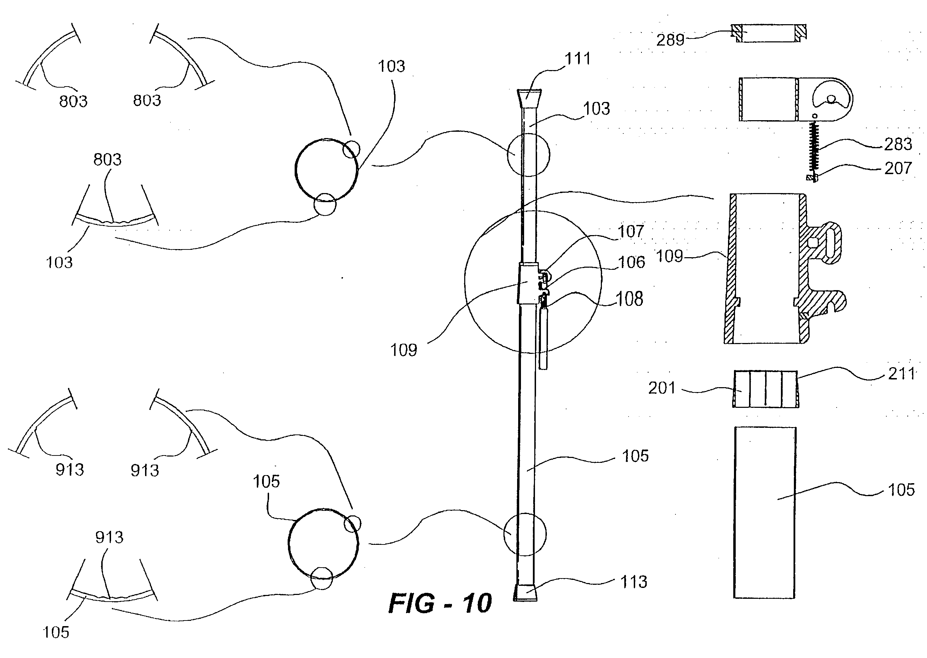

By tightening the screws 817, the moving grip portion 809 will be slightly forced out of the cavity 811. As the upper pipe 103 has an internal wall with a plurality of grooves 803, crevices at the wall of the tension base body 809 will thus engage with these grooves 803. Figure 10 shows a magnified view of a partial cross-section of the upper pipe 103.

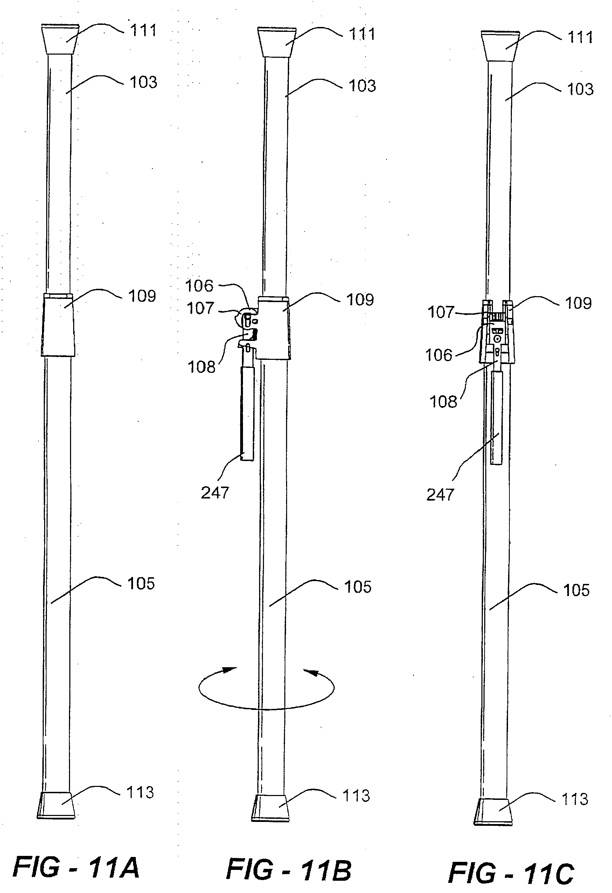

As shown in Figure 11a, the top tensioned mechanism 111 allows relative rotational movement of the pipe assembly. 101 about its longitudinal axis even when the top tensioned mechanism 111 is compressed against the ceiling to secure the pipe assembly 101 in place. Figures 11b and 11c show the arrangement of the pipe assembly 101 when viewed at different positions.

Further an anti-slip rubber cup 831 is attached to the upper end of the top tensioned mechanism 111 to provide a layer of friction against the ceiling.

The top tensioned mechanism 111 may be fabricated using a rubber piece 833 shown in Figure 8, to achieve a similar tension absorbing effect.

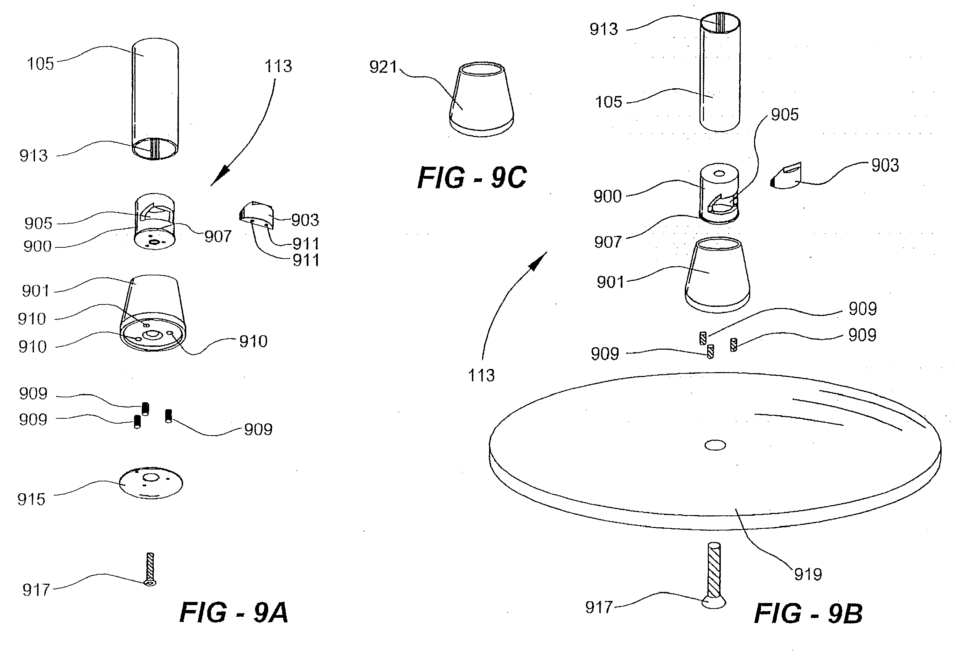

Figure 9 shows a bottom fixed mechanism 113 comprising a base body 900 and a base connector 901 attached to a base end of the lower pipe 105. A bottom moving grip 903 is cut out from a wall of the base body 900 to form a cavity 905. Besides the feature of the stainless steel spring 801 in the top tensioned mechanism 111, the structure and operation of the bottom fixed mechanism 113 are identical to those of the top tensioned mechanism 111.

A bottom end step 907 meets with one end of the lower pipe 105, and screws 909 are fitted through openings 910 of the base connector 58 to connect with screw openings 911 on the bottom moving grip 903. Like the end step 807 of the top tensioned mechanism 111, the engagement between the end step 907 and the one end of the lower pipe 105 allows the user to rotate the pipe assembly 101 even when it is held in place between the ceiling and floor. Advantageously this allows the user to re-adjust the position of the handle 108 to enhance the ease of usage, for example when pipe assembly 101 is placed at the corner of a room or where access is limited by walls

By tightening the screws 909, the bottom moving grip 903 will be slightly forced out of the cavity 905 towards the inner wall of the lower pipe 105. Thus the bottom fixed mechanism 113 is securely held against the lower pipe 105. As the lower pipe 105 also has an internal wall with a plurality of grooves 913, crevices at the wall of moving grip body 903 will thus engage with these grooves 913. Figure 10 shows a magnified view of a partial cross-section of the lower pipe 105.

An anti-slip rubber cup 915 is attached to a base end of the base connector 901, as shown in Figure 9a. A counter sunk screw 917 is used to connect various parts of the bottom fixed mechanism 113 together. Alternatively the counter sunk screw 917 may be used to connect a base plate 919 with various parts of the bottom fixed mechanism 113. The base plate 919 would be especially useful if the pipe assembly 101 has to be mounted on a heavy base, either because there is no ceiling or if the ceiling is too high to be reached. This may provide a structure that is user-friendly and adaptable for all suitable sorts of usage.

The base connector 901 may be fabricated using a rubber piece 921, as shown in Figure 9.

After the pipe assembly 101 is tensioned against the floor and the ceiling, or constructed to rest on a base, the user can apply clamps to secure various items to the pipe assembly 101 either for display or use. Different kinds of clamps - e.g. 1-way clamps, 2-way clamps, and/or 4-way clamps - can be used on the pipe assembly 101. Among these different kinds of clamps, 4-way clamps not only have the most innovative designs but also the most pressing safety concerns.

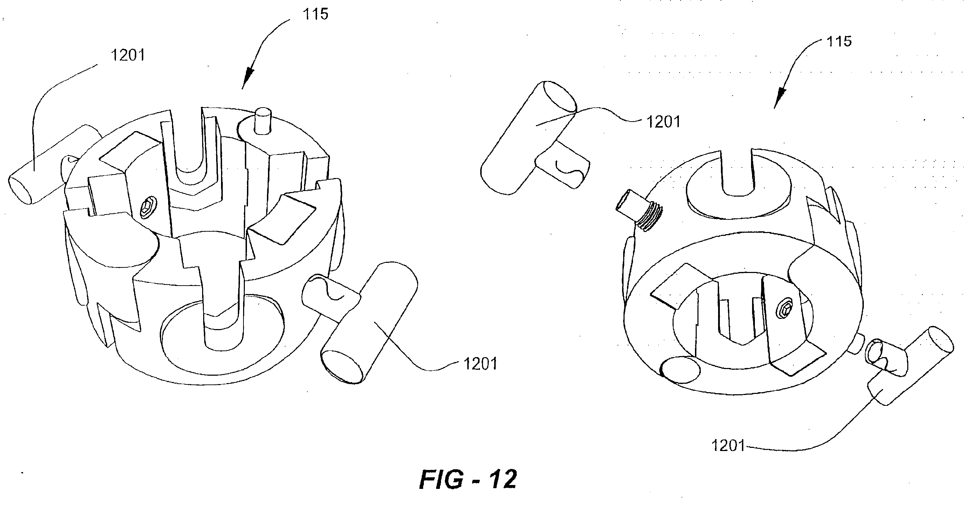

Figure 12 shows the 4-way clamp 115 for securing signage, shelves, lighting devices, and so forth. Specifically the handles 1201 of the 4-way clamp 115 for tightening and loosening the 4-way clamp 115 on the upper or lower pipe 103, 105 are removable.

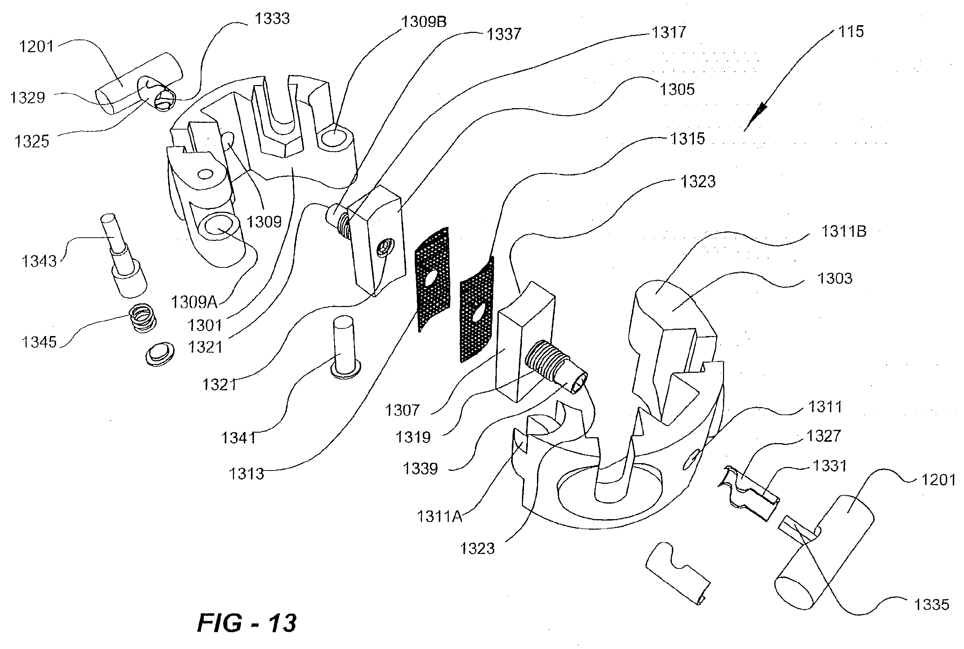

Figure 13 shows an exploded view of the 4-way clamp 115, which comprises two main bodies 1301, 1303. The clamping pads 1305, 1307 are attached to the main bodies 1301, 1303 via engagement means at locations 1309, 1311 of the main bodies 1301, 1303.

Curved concave surfaces of the clamping pads 1305, 1307 are fitted with rubber pads 1313, 1315. The rubber pads 1313, 1315 provide friction between the pipe and the clamping pads 1305, 1307. The clamping pads 1305, 1307 and the rubber pads 1313, 1315 can be in any shape, any material or any form, as long as they achieve the same functions.

Threads 1317, 1319 are connected to the clamping pads 1305, 1307 via screws 1321 and 1323, which prevent the clamping pads 1305, 1307 from falling out of the threads 1317, 1319. Opposite ends of the threads 1317, 1319 are smoothened on their outside surfaces to cover hexagonally-shaped openings 1321, 1323.

When the 4-way clamp 115 is assembly together as in Figure 12 the handles 1201 meet thread ends 1337, 1339. The handles 1201 of the 4-way clamp 115 are attached to anti-slip ring members (shown as housing spring rings 1325, 1327) by fitting hexagon shape protrusions 1333, 1335 into the housing spring rings 1325, 1327. Accordingly the housing spring rings 1325, 1327 conceal the thread ends 1337, 1339 when the handles 1201 are fitted inside the hexagonally-shaped openings 1321, 1323.

As the user continues pushing the handle 1201, the protrusions 1333, 1335 will be firmed fixed inside the hexagonally-shaped openings 1321, 1323 of the clamping pads 1305, 1307. The user can then turn the handle 1201 clockwise to tighten the main bodies 1301, 1303 and thereby prevents their slidable movement, or anti-clockwise to loosen the main bodies 1301, 1303 and thereby allows their slidable movement. Accordingly the handles 1201 can either remain on the 4-way clamp 115, or may be removed to avoid any tampering by an unauthorised user.

The exposed thread ends 1337, 1339 may attach with female adapters via screw locks for other functions. The shape of handle 1201 may be in any shape, any form, and may be fabricated using any kind of materials.

The two main bodies 1301, 1303 are connected at the positions 1309b, 1311 b via a pin 1341, which acts as a pivot point of the two main bodies 1301, 1303. The 4-way clamp 115 is opened at the position 1309a. An additional safety pin 1343 is inserted through the openings of the main body 1301 at the positions 1309a and cooperates with a spring 1345 such that the 4-way clamp 115 is released from the main structure when the user presses the safety pin 1343. The middle part of safety pin 1343 will snap onto 1311 a when it meets with 1309a. After the safety pin snaps onto the opening of 1311 a, the spring 1345 will push the safety pin and this will lock the end 1309a and 1311 a in place. Due to the crevices 1329, 1331 on the housing spring rings 1325, 1327, a tiny tension gripping effect is created on the thread ends 1337, 1339. Thus the 4-ways clamp 115 will remain at its original position on a pipe for some time after it has been loosened. This is because the main bodies 1301, 1303 are maintained in their clamped position. Advantageously this may allow the user to have more reaction time to support the clamp, thereby reducing any chance of injury.

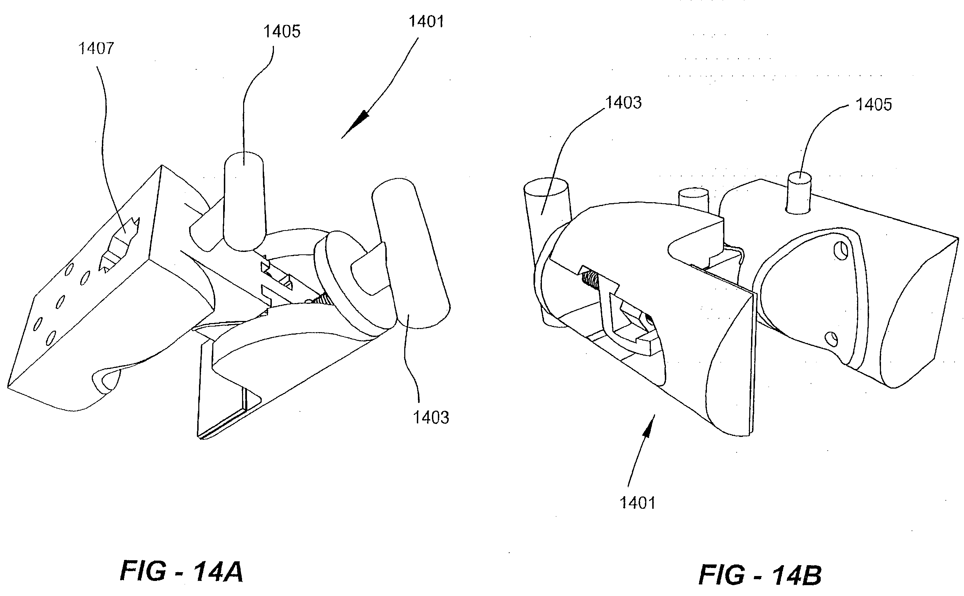

Figures 14a to 14b show different views of a 1-way clamp 1401 comprising a pipe handle 1403, a socket handle 1405, and a socket 1407 to which an item can be attached for display or use. By turning the pipe handle 1403 in respective clockwise and anti-clockwise directions, the 1-way clamp 1403 can be tightened or loosened from a pipe. Likewise the item for display or use can be secured or released from the socket 1407 by turning the socket handle 1405 in respective clockwise and anti-clockwise directions. Like the handles 1201 of the 4-way clamp 115, the socket handle 1405 and the pipe handle 1403 of the 1-way clamp 1401 may be removed to avoid any tampering by an unauthorised user.

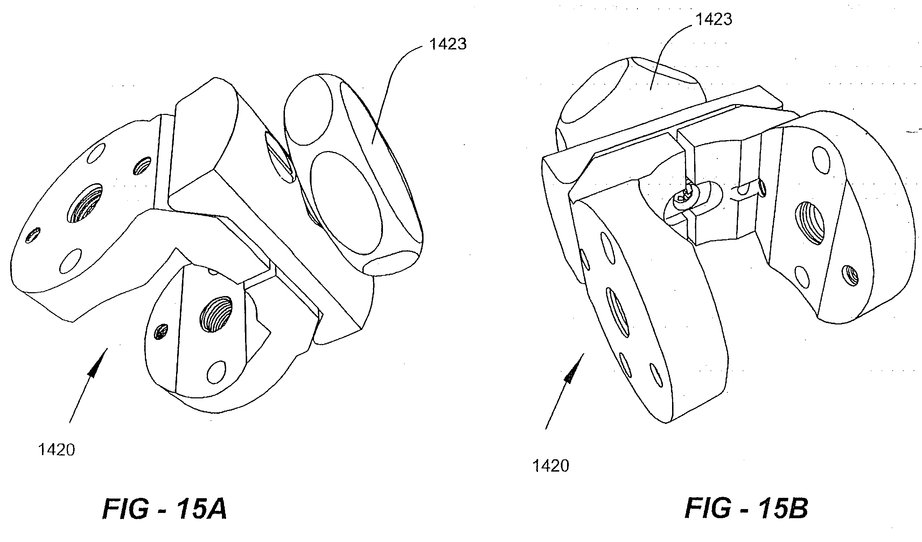

Figures 15a and 15b show different views of 2-way mini clamp 1420 that works for 103 and 105 in smaller diameter version. The 2-way clamp 1420 comprises a handle 1423 for tightening or loosening the 2-way clamp 1420. Like the handles 1201 of the 4-way clamp 115, the handle 1423 of the 2-way clamp 1420 may be removed to avoid any tampering by an unauthorised user.

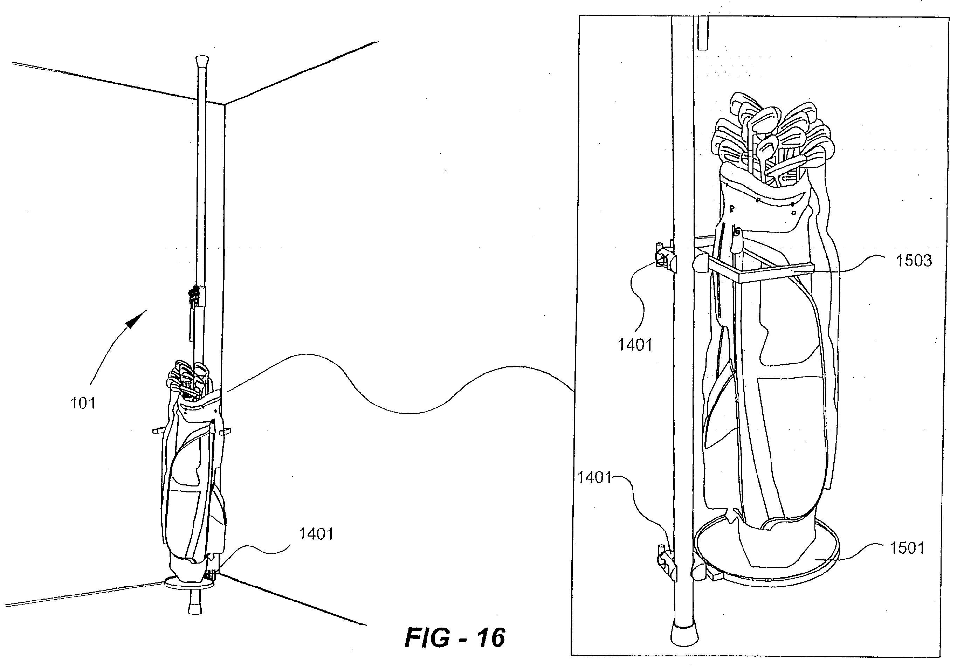

Figure 16 shows the pipe assembly 101 having two 1-way clamps 1401, to which different parts of a support structure are attached. In particular the support structure comprises a base plate 1501 for supporting the golf bag and a supporting member 1503 for defining the storage area.

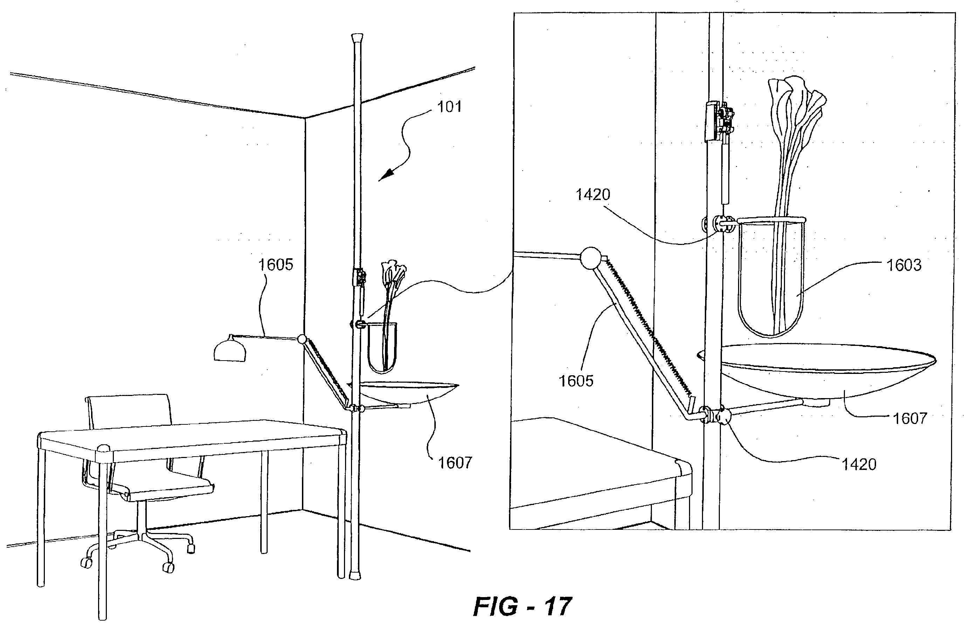

Figure 17 shows the pipe assembly 101 having a 2-way mini clamp 1420 arranged along a pipe. In particular the pipe assembly 101 is used in an office setting for both decorative and functional uses - the 2-way mini clamp 1420 secures a flower vase 1603, a lamp 1605 and a decorative bowl 1607 to the main structure.

It should be appreciated that the pipe assembly 101 may comprise aluminum profiles, cast aluminum, stainless steel springs, stainless steel screws, plastic, darin or rubber. The pipe assembly 101 may be constructed at different places such as at shopping malls, retails, homes, offices, exhibitions, hospitals, and so forth. The materials for fabricating various parts of the pipe assembly 101 may be water-proof and suitable for both indoor and outdoor usages.

The described embodiment should not be construed as limitative. For example, although the engagement device is described as a "fan-shaped disc" in the embodiment, it is envisaged that the engagement device may be in other shapes, for example, a circular disc. Also, in the described embodiment, the clamp body 107 of the clamp 106 is described to clamp the upper pipe 103 but the clamp body 107 may be adapted to clamp the lower pipe too. Indeed, the pipe assembly 101 may be "reversed". Moreover, whilst it has been described that the upper pipe 103 is slidably movable within the lower pipe 105, it should be appreciated that the upper pipe 103 may be telescoped within the lower pipe 105 in such way that the upper pipe 103 does not separate from the lower pipe 105 beyond a maximum extension. It should also be appreciated that the pipe assembly 101 can be tensioned against the ceiling and the floor even in the absence of the top tensioned mechanism 111 and/or the bottom fixed mechanism 113. Further, it should be appreciated that the housing spring ring members 1327, 1327 of the 4-way clamp 115 may also be applied on the 1-way clamp 1401 and/or the 2-way clamp 1420 to achieve an identical or similar tension gripping effect to maintain the respective clamp on a pipe.

## Claims

1. A clamp (106) for a pipe assembly (101) having an adjustable effective length, the clamp (106) comprising:
a clamp body (107) configured to be clamped to the pipe assembly (101) and includes an engagement device (233,234) separable from the clamp body (107), the engagement device (233,234) having a channel (301); and
a handle (108) pivotably connected to the clamp body (107) and includes an engagement member (227,229);
wherein the handle (108) is pivotable between a first position in which the engagement member (227,229) engages with the channel (301) of the engagement device (233,234) to maintain the position of the handle (108) relative to the clamp body (107) whilst allowing free adjustment of the effective length of the pipe assembly (101), and a second position in which the engagement member (227,229) is disengaged from the channel (301) to tighten the clamp body (107), **characterised in that**
the channel (301) extends radially from a common pivoting axis (307) of the clamp body (107) and the handle (108).

2. The clamp (106) of claim 1, wherein the channel (301) is arranged from a line of symmetry on a major surface of the engagement device (233,234) at an angle of between 28 and 33 degrees about the common pivoting axis (307).

3. The clamp (106) of claim 1 or claim 2, wherein the engagement device (233,234) of the clamp body (107) further includes a tapered section (303) for guiding the engagement member (227,229) out of the radial channel (301) to tighten the clamp body (107) gradually.

4. The clamp (106) of claim 3, wherein the tapered section (303) is arranged adjacent to the channel (301) at an angle of between 43 and 53 degrees from the common pivoting axis (307).

5. The clamp (106) of any one of the preceding claims, wherein a wall of the clamp body (107) comprises a plurality of planar surfaces (245a,245b,245c) for providing a grip to the pipe assembly (101).

6. The clamp (106) of any one of the preceding claims, wherein the handle (108) comprises:
a pivotal connection (212) for connecting to the clamp body (107); and
a lever (247) operable by a user to tighten or loosen the clamp body (107),
wherein the lever (247) is removable to the pivotal connection (212).

7. The clamp (106) of claim 6, wherein the handle (108) comprises a socket (411,425) for securing an item for display or use, the socket (411) being removably attached to the pivotal connection (212) in place of the lever (247).

8. The clamp (106) of any one of the preceding claims, wherein the handle (108) comprises a locking mechanism (257) for engaging with a catch (267,269) of a lock (109) to prevent pivotal movement of the handle (108) about the clamp body (107).

9. The clamp (106) of claim 8, wherein the handle (108) further comprises a lock-release member (265) configured to allow the locking mechanism (257) to be disengaged from the catch (267,269) to enable the pivotal movement of the handle (108) about the clamp body (107).

10. The clamp (106) of claim 9, wherein the lock-release member (265) is removable.

11. A pipe assembly (101) having an adjustable effective length and comprising the clamp (106) of any one of claims 1 to 10.

12. The pipe assembly (101) of claim 11, further comprising a lock (109) having a catch (267,269) for engaging with the locking mechanism (257) of the handle (108) to prevent pivotal movement of the handle (108) about the clamp body (107).

13. The pipe assembly (101) of claim 12, further comprising a self-tightening rim (201) arranged between a pipe (105) and the lock (109) for preventing movement of the lock (109).

14. The pipe assembly (101) of any one of claims 11 to 13, further comprising a support surface engagement member (111,113) for compression against a surface to secure the pipe assembly (101) in place.

15. The pipe assembly (101) of claim 14, wherein the support surface engagement member (111,113) comprises a coupling member (807,907) for coupling to an end of the pipe assembly (103,105) and configured to enable relative rotation of the pipe assembly (101) about the longitudinal axis.

16. The pipe assembly (101) of claim 14 or claim 15, wherein the support surface engagement member (111,113) comprises a cut-out portion (809,903), the cut-out portion (809,903) being reattachable to a tensioning device (805,900).

17. The pipe assembly (101) of any one claims 14 to 16, wherein an internal wall of a pipe (103,105) has a plurality of grooves (803,913) to grip the support surface engagement member (111,113).

18. The pipe assembly (101) of any one of claims 11 to 17, further comprising a further clamp (115,1401,1420) having a main clamp body (1301,1303) and a handle (1201,1403,1423) for tightening or loosening the main clamp body (1301,1303), the handle (1201,1403,1423) being separable from the main clamp body (1301,1303).

19. The pipe assembly (101) of claim 18 wherein the further clamp (115) further comprises an anti-slip ring member (1325,1327), wherein a wall of the anti-slip ring member (1325,1327) has a crevice (1329,1331) to provide a grip for maintaining the main clamp body (1301,1303) in a clamped position.

## Patentansprüche

1. Schelle (106) für eine Rohranordnung (101), welche eine einstellbare Nutzlänge aufweist, wobei die Schelle (106) umfasst:
einen Schellenkörper (107), welcher zum Festklemmen mit der Rohranordnung (101) konfiguriert ist und eine Einrastvorrichtung (233, 234) umfasst, welche vom Schellenkörper (107) trennbar ist, wobei die Einrastvorrichtung (233, 234) einen Kanal (301) aufweist; und
einen Griff (108), welcher drehbar mit dem Schellenkörper (107) verbunden ist und ein Einrastelement (227, 229) umfasst;
wobei der Griff (108) zwischen einer ersten Position, in welcher das Einrastelement (227, 229) mit dem Kanal (301) der Einrastvorrichtung (233, 234) einrastet, um die Position des Griffs (108) relativ zum Schellenkörper (107) beizubehalten, wobei gleichzeitig eine freie Einstellung der Nutzlänge der Rohranordnung (101) ermöglicht wird, und einer zweiten Position, in welcher das Einrastelement (227, 229) vom Kanal (301) ausgerastet ist, um den Schellenkörper (107) zu spannen, schwenkbar ist, **dadurch gekennzeichnet, dass**
der Kanal (301) sich radial aus einer gemeinsamen Drehachse (307) des Schellenkörpers (107) und des Griffs (108) erstreckt.

2. Schelle (106) nach Anspruch 1, wobei der Kanal (301) von einer Symmetrielinie auf einer Hauptfläche der Einrastvorrichtung (233, 234) in einem Winkel zwischen 28 und 33 Grad um die gemeinsame Drehachse (307) angeordnet ist.

3. Schelle (106) nach Anspruch 1 oder 2, wobei die Einrastvorrichtung (233, 234) des Schellenkörpers (107) ferner einen verjüngten Abschnitt (303) umfasst, zum Führen des Einrastelements (227, 229) aus dem radialen Kanal (301) hinaus, um den Schellenkörper (107) allmählich zu spannen.

4. Schelle (106) nach Anspruch 3, wobei der verjüngte Abschnitt (303) dem Kanal (301) anliegt, wobei er einen Winkel zwischen 43 und 53 Grad relativ zur gemeinsamen Drehachse (307) bildet.

5. Schelle (106) nach einem der vorhergehenden Ansprüche, wobei eine Wand des Schellenkörpers (107) eine Mehrzahl von flachen Oberflächen (245a, 245b, 245c) umfasst zum Bereitstellen einer Greifmöglichkeit für die Rohranordnung (101).

6. Schelle (106) nach einem der vorhergehenden Ansprüche, wobei der Griff (108) umfasst:
eine Drehverbindung (212) zum Verbinden des Schellenkörpers (107); und
einen Hebel (247), welcher von einem Benutzer zum Spannen oder Lösen des Schellenkörpers (107) betätigbar ist,
wobei der Hebel (247) von der Drehverbindung (212) abnehmbar ist.

7. Schelle (106) nach Anspruch 6, wobei der Griff (108) eine Fassung (411, 425) zum Befestigen eines Artikels zur Anzeige oder Benutzung umfasst, wobei die Fassung (411) an die Drehverbindung (212) anstelle des Hebels (247) abnehmbar befestigt ist.

8. Schelle (106) nach einem der vorhergehenden Ansprüche, wobei der Griff (108) ein Verriegelungsmechanismus (257) zum Einrasten mit einem Riegel (267, 269) eines Verschlusses (109) umfasst, um eine Drehbewegung des Griffs (108) um den Schellenkörper (107) zu verhindern.

9. Schelle (106) nach Anspruch 8, wobei der Griff (108) ferner ein Entriegelungselement (265) umfasst, welches zum Ermöglichen des Ausrastens des Verriegelungsmechanismus (257) vom Riegel (267, 269) konfiguriert ist, um eine Drehbewegung des Griffs (108) um den Schellenkörper (107) zu ermöglichen.

10. Schelle (106) nach Anspruch 9, wobei das Entriegelungselement (265) entfernbar ist.

11. Rohranordnung (101) mit einer einstellbaren Nutzlänge und umfassend die Schelle (106) nach einem der Ansprüche 1 bis 10.

12. Rohranordnung (101) nach Anspruch 11, ferner umfassend einen Verschluss (109) mit einem Riegel (267, 269) zum Einrasten mit dem Verriegelungsmechanismus (257) des Griffs (108), um eine Drehbewegung des Griffs (108) um den Schellenkörper (107) zu verhindern.

13. Rohranordnung (101) nach Anspruch 12, ferner umfassend einen selbstklemmenden Rand (201), welcher zwischen einem Rohr (105) und dem Verschluss (109) angeordnet ist, um eine Bewegung des Verschlusses (109) zu verhindern.

14. Rohranordnung (101) nach einem der Ansprüche 11 bis 13, ferner umfassend ein Tragflächeneinrastelement (111, 113) zum Komprimieren gegen eine Fläche, um die Rohranordnung (101) sicher zu arretieren.

15. Rohranordnung (101) nach Anspruch 14, wobei das Tragflächeneinrastelement (111, 113) ein Kopplungsglied (807, 907) umfasst zum Koppeln mit einem Ende der Rohranordnung (103,105) und welches konfiguriert ist, um eine relative Drehung der Rohranordnung (101) um die Längsachse zu ermöglichen.

16. Rohranordnung (101) nach Anspruch 14 oder Anspruch 15, wobei das Tragflächeneinrastelement (111, 113) einen Ausschnittteil (809, 903) umfasst, wobei der Ausschnittteil (809, 903) an eine Spannvorrichtung (805, 900) wieder befestigbar ist.

17. Rohranordnung (101) nach einem der Ansprüche 14 bis 16, wobei eine Innenwand eines Rohrs (103, 105) eine Mehrzahl von Rillen (803, 913) aufweist, um das Tragflächeneinrastelement (111, 113) zu ergreifen.

18. Rohranordnung (101) nach einem der Ansprüche 11 bis 17, ferner umfassend eine weitere Schelle (115, 1401, 1420) mit einem Hauptschellenkörper (1301, 1303) und einem Griff (1201, 1403, 1423) zum Spannen oder Lösen des Hauptschellenkörpers (1301, 1303), wobei der Griff (1201, 1403, 1423) vom Hauptschellenkörper (1301, 1303) entfernbar ist.

19. Rohranordnung (101) nach Anspruch 18, wobei die weitere Schelle (115) ferner ein rutschhemmendes Ringelement (1325, 1327) umfasst, wobei eine Wand des rutschhemmenden Ringelements (1325, 1327) einen Spalt (1329, 1331) aufweist, um eine Greifmöglichkeit zum Halten des Hauptschellenkörpers (1301, 1303) in einer geklemmten Position bereitzustellen.

## Revendications

1. Collier de serrage (106) pour un ensemble de tuyaux (101), ayant une longueur effective ajustable, le collier de serrage (106) comprenant :
un corps de collier de serrage (107), destiné à être serré sur l'ensemble de tuyaux (101) et englobant un dispositif d'engagement (233, 234) pouvant être séparé du corps du collier de serrage (107), le dispositif d'engagement (233, 234) comportant un canal (301) ; et
une poignée (108) connectée de manière pivotante au corps du collier de serrage (107) et englobant un élément d'engagement (227, 229) ;
dans lequel la poignée (108) peut pivoter entre une première position, dans laquelle l'élément d'engagement (227, 229) s'engage dans le canal (301) du dispositif d'engagement (233, 234) pour maintenir la position de la poignée (108) par rapport au corps du collier de serrage (107), tout en permettant un ajustement libre de la longueur effective de l'ensemble de tuyaux (101), et une deuxième position, dans laquelle l'élément d'engagement (227, 229) est dégagé du canal (301) pour serer le corps du collier de serrage (107) ; **caractérisé en ce que** :
le canal (301) s'étend radialement à partir d'un axe de pivotement commun (307) du corps du collier de serrage (107) et de la poignée (108).

2. Collier de serrage (106) selon la revendication 1, dans lequel le canal (301) est agencé à partir d'une ligne de symétrie sur une surface majeure du dispositif d'engagement (233, 234), à un angle compris entre 28 et 33 degrés autour de l'axe de pivotement commun (307).

3. Collier de serrage (106) selon les revendications 1 ou 2, dans lequel le dispositif d'engagement (233, 234) du corps du collier de serrage (107) englobe en outre une section effilée (303) pour guider l'élément d'engagement (227, 229) hors du canal radial (301), pour serrer progressivement le corps du collier de serrage (107).

4. Collier de serrage (106) selon la revendication 3, dans lequel la section effilée (303) est agencée de manière adjacente au canal (301), à un angle compris entre 43 et 53 degrés par rapport à l'axe de pivotement commun (307).

5. Collier de serrage (106) selon l'une quelconque des revendications précédentes, dans lequel une paroi du corps du collier de serrage (107) comprend plusieurs surfaces planes (245a, 245b, 245c) pour établir un moyen de préhension de l'ensemble de tuyaux (101).

6. Collier de serrage (106) selon l'une quelconque des revendications précédentes, dans lequel la poignée (108) comprend :
une connexion pivotante (212), pour connecter le corps du collier de serrage (107) ; et
un levier (247) pouvant être actionné par un utilisateur pour serrer ou desserrer le corps du collier de serrage (107) ;
dans lequel le levier (247) peut être retiré de la connexion pivotante (212).

7. Collier de serrage (106) selon la revendication 6, dans lequel la poignée (108) comprend un support (411, 425) pour sécuriser un article devant être présenté ou utilisé, le support (411) étant fixé de manière amovible sur la connexion pivotante (212) à la place du levier (247).

8. Collier de serrage (106) selon l'une quelconque des revendications précédentes, dans lequel la poignée (108) comprend un mécanisme de verrouillage (257) destiné à s'engager dans un cliquet (267, 269) d'un verrou (109) pour empêcher le déplacement pivotant de la poignée (108) autour du corps du collier de serrage (107).

9. Collier de serrage (106) selon la revendication 8, dans lequel la poignée (108) comprend en outre un élément de dégagement du verrouillage (265), configuré pour permettre le dégagement du mécanisme de verrouillage (257) du cliquet (267, 269), pour permettre le déplacement pivotant de la poignée (108) autour du corps du collier de serrage (107).

10. Collier de serrage (106) selon la revendication 9, dans lequel l'élément de dégagement du verrouillage (265) est amovible.

11. Ensemble de tuyaux (101), ayant une longueur effective ajustable et comprenant le collier de serrage (106) selon l'une quelconque des revendications 1 à 10.

12. Ensemble de tuyaux (101) selon la revendication 11, comprenant en outre un verrou (109) comportant un cliquet (267, 269) destiné à s'engager dans le mécanisme de verrouillage (257) de la poignée (108) pour empêcher un déplacement pivotant de la poignée (108) autour du corps du collier de serrage (107).

13. Ensemble de tuyaux (101) selon la revendication 12, comprenant en outre un rebord à serrage automatique (201) agencé entre un tuyau (105) et le verrou (109), pour empêcher un déplacement du verrou (109).

14. Ensemble de tuyaux (101) selon l'une quelconque des revendications 11 à 13, comprenant en outre un élément d'engagement à surface de support (111, 113) en vue d'une compression contre une surface, pour fixer l'ensemble de tuyaux (101) dans sa position.

15. Ensemble de tuyaux (101) selon la revendication 14, dans lequel l'élément d'engagement à surface de support (111, 113) comprend un élément d'accouplement (807, 907) en vue d'un accouplement à une extrémité de l'ensemble de tuyaux (103, 105) et destiné à permettre une rotation relative de l'ensemble de tuyaux (101) autour de l'axe longitudinal.

16. Ensemble de tuyaux (101) selon la revendication 15, dans lequel l'élément d'engagement à surface de support (111, 113) comprend une partie découpée (809, 903), la partie découpée (809, 903) pouvant être rattachée à un dispositif tendeur (805, 900).

17. Ensemble de tuyaux (101) selon l'une quelconque des revendications 14 à 16, dans lequel une paroi interne d'un tuyau (103, 105) comporte plusieurs rainures (803, 913) pour saisir l'élément d'engagement à surface de support (111, 113).

18. Ensemble de tuyaux (101) selon l'une quelconque des revendications 11 à 17, comprenant en outre un collier de serrage additionnel (115, 1401, 1420) comportant un corps de collier de serrage principal (1301, 1303) et une poignée (1201, 1403, 1423) pour serrer ou desserrer le corps du collier de serrage principal (1301, 1303), la poignée (1201, 1403, 1423) pouvant être séparée du corps du collier de serrage principal (1301, 1303).

19. Ensemble de tuyaux (101) selon la revendication 18, dans lequel le collier de serrage additionnel (115) comprend en outre un élément de bague antidérapante (1325, 1327), une paroi de l'élément de bague antidérapante (1325, 1327) comportant une crevasse (1329, 1331) pour fournir un moyen de préhension pour maintenir le corps du collier de serrage principal (1301, 1303) dans une position serrée.
